# FASCICULE DE BREVET EUROPEEN

(11) **EP 1 080 951 B1**
(45) Date de publication et mention de la délivrance du brevet: **23.02.2005**
(21) Numéro de dépôt: 00402380.0
(22) Date de dépôt: 29.08.2000
(51) Int. Cl.: B60C 23/04

(54) **Récepteur pour la réception des valeurs de pression des pneumatiques et des signaux de télécommande**
Empfänger zum Empfangen von Reifendruckwerten und Fernbedienungssignalen
Receiver for receiving tire pressure values and remote control signals

(30) Priorité: 03.09.1999 FR 9911075
(43) Date de publication de la demande: 07.03.2001
(73) Titulaire: JOHNSON CONTROLS AUTOMOTIVE ELECTRONICS, 95526 Cergy Pontoise Cédex (FR)
(72) Inventeur: Delaporte, Francis, 95520 Osny (FR)
(74) Mandataire: Bloch, Gérard

(56) Documents cités:
- EP-A- 0 671 289
- DE-A- 19 720 123
- "THE ELECTRONIC MOTORIST" IEEE SPECTRUM,US,IEEE INC. NEW YORK, vol. 32, no. 3, 1 mars 1995 (1995-03-01), pages 37-41,44-48, XP000505503 ISSN: 0018-9235

## Description

La présente invention concerne les transmissions sans fil permettant de surveiller ou d'actionner des organes d'un véhicule automobile et en particulier de surveiller la pression des pneumatiques, par des capteurs de pression logés dans ceux-ci et reliés par radio à un récepteur associé au calculateur de bord. De même, les serrures des portières peuvent être télécommandées, à partir d'un émetteur portable, à travers un récepteur du véhicule commandant des actionneurs de ces serrures.

Ces deux récepteurs représentent un certain volume de matériel et donc un certain coût car, en particulier, ils comportent des circuits d'économie de consommation pour que, au moins lorsque le véhicule est à l'arrêt, ces récepteurs ne déchargent pas trop rapidement la batterie du véhicule.

EP-671 289A enseigne un récepteur prévu pour recevoir une trame de format déterminé dont la valeur d'un champ spécifie s'il s'agit d'un message de mesure de pression ou d'une télécommande.

DE-197 20 123A enseigne un récepteur multiprotocole démodulateur AM ou FM, sans fournir de détail sur les protocoles de transmission.

La présente invention vise à réduire le volume de matériel radio.

A cet effet, l'invention concerne un récepteur de surveillance de la pression des pneumatiques d'un véhicule automobile, comportant des moyens de réception sans fil de trames de signaux de pression agencés pour les transmettre à des moyens de traitement, caractérisé par le fait que les moyens de traitement sont agencés pour aussi traiter des trames d'un autre type pour d'autres signaux, les moyens de réception sont agencés pour passer alternativement d'un état de veille à un état réveillé selon un cycle prédéterminé et il est prévu des moyens de discrimination de trames agencés pour commander en conséquence les moyens de traitement, et pour discriminer les deux types particuliers de trames par discrimination entre deux fréquences particulières de transmission de données dans deux en-têtes respectifs des trames, de durées au moins égales au cycle.

Ainsi, le récepteur est multifonction, on évite donc la nécessité d'un récepteur spécifique pour les trames des autres signaux, servant par exemple à la télécommande des serrures des portières et le récepteur peut ainsi capter une émission d'en-tête de l'une ou l'autre des trames lorsqu'il est à l'état réveillé et les moyens de discrimination peuvent déterminer rapidement le traitement qui convient à la suite de la trame.

L'invention sera mieux comprise à l'aide de la description suivante d'une forme de réalisation préférée du récepteur de surveillance de pression et de l'émetteur associé de télécommande de l'invention, en référence au dessin annexé, sur lequel :
- la figure 1 est une représentation schématique d'un véhicule automobile équipé du récepteur de l'invention,
- la figure 2 est un schéma par blocs fonctionnels du récepteur,
- la figure 3 est un schéma par bloc fonctionnels d'un émetteur portable de télécommande, à travers le récepteur, de serrures de portières du véhicule, et
- la figure 4, formée des figures 4A, 4B et 4C, représente respectivement, en fonction du temps t, un signal d'échantillonnage de trames et deux trames différentes de signaux radio reçus et échantillonnées par le récepteur.

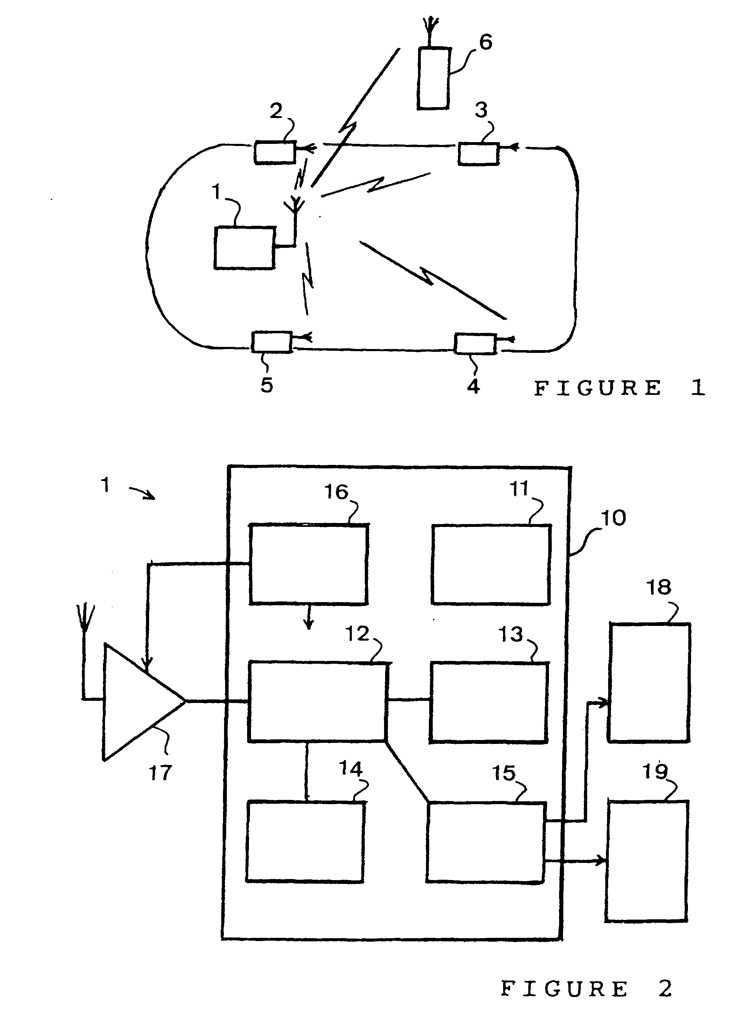

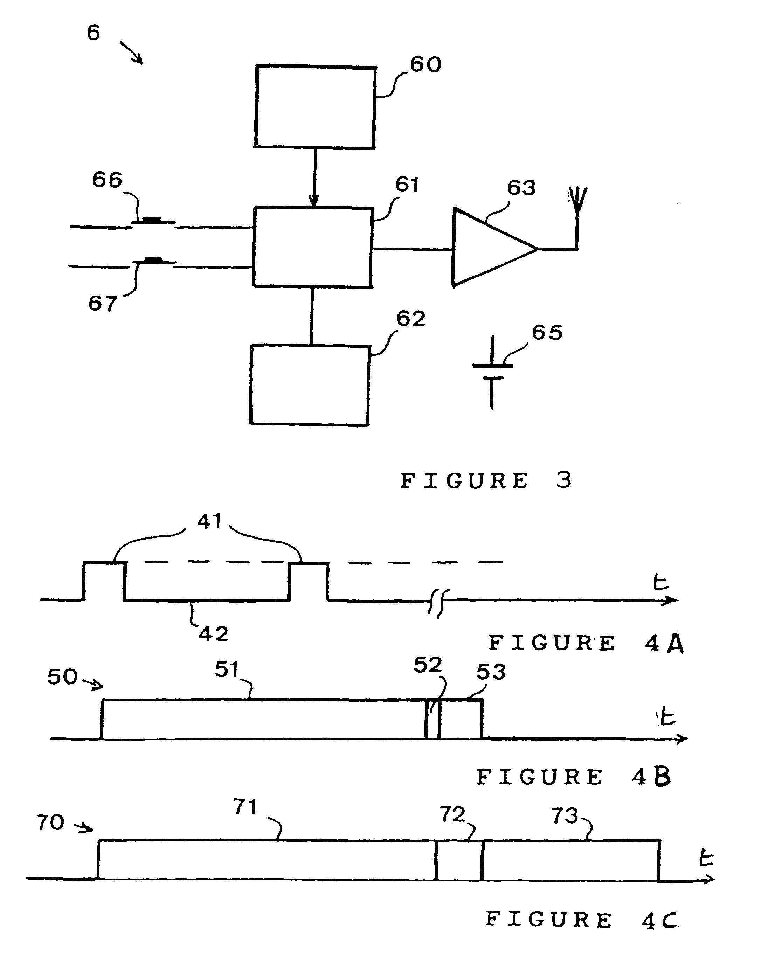

Le véhicule automobile esquissé en vue de dessus sur la figure 1 est équipé d'un récepteur sans fil 1, ici radio, de trames 50 (fig. 4B) de signaux de pression provenant de capteurs de pression associés à des émetteurs radio 2, 3, 4, 5 logés dans les pneumatiques respectifs du véhicule.

Le récepteur 1 est en outre prévu pour recevoir des trames 70 (fig. 4C) d'un type ou format autre que celui des trames 50 pour d'autres signaux, de télécommande, provenant d'un émetteur portable sans fil 6, ici donc radio, de télécommande d'organes du véhicule, ici les serrures des portières.

L'émetteur 6, ou clé électronique, comporte un circuit de base de temps 60 qui commande le séquencement d'un microprocesseur 61 relié à une mémoire 62 contenant deux trames, de même format 70, de signaux de télécommande et commandé par deux boutons 66 et 67 de, respectivement, verrouillage et déverrouillage des serrures des portières du véhicule. Le microprocesseur 61 commande, à travers un circuit émetteur radio 63, l'émission des trames 70 de la mémoire 62 dont l'entête 71 a une durée au moins égale à celle d'un en-tête 51 d'une trame 50. Cette durée est fixée par le nombre de bits de l'en-tête 51, formant ici une séquence de 0 et 1 qui alternent régulièrement afin de permettre au récepteur 1 de se synchroniser (synchronisation bit) lors de la réception de cet en-tête 71.

En variante, il pourrait être prévu une émission répétée d'une paire de bits 0 et 1 en mémoire 62, dont la durée totale serait fixée par un compteur de bits émis associé à un comparateur. Le comparateur, référencé à un nombre déterminé de bits à émettre, ferait passer l'émission au champ suivant 72 lorsqu'est atteint le nombre voulu de bits, émis à une vitesse déterminée et donc représentant la durée prévue d'entête 71. Une pile 65 alimente l'ensemble.

Le récepteur 1 de la figure 2 comporte en tête un circuit radio récepteur démodulateur 17 à antenne unique relié en sortie à une unité centrale ou microprocesseur 10 qui comporte une base de temps 11 et une unité arithmétique 12 de discrimination des formats 50, 70 des trames reçues, associée à une mémoire 13 de trames 50 de signaux de télésurveillance de pression des pneumatiques et de trames 70 des signaux de télécommande de l'émetteur 6. Une paire de filtres passe-bande 14, en parallèle, est ici prévue et associée à l'unité arithmétique 12. En outre, le microprocesseur 10 comporte des circuits 15 de traitement ou exploitation des signaux des trames 50, 70 reçues et un circuit 16 de veille et de réveil commandant le circuit récepteur 17 et le reste des circuits du microprocesseur 10, hormis la base de temps 11. Ce dernier commande un processeur ou calculateur d'habitacle 18 de signalisation de pression des pneumatiques et un actionneur 19 de commande des serrures des portières du véhicule. Le microprocesseur 10 est ici en technologie C.MOS et le circuit 16 commande la veille du reste des circuits en bloquant simplement des signaux d'horloge qui les font fonctionner, provenant de la base de temps 11. Le circuit récepteur 17 est quant à lui mis en veille par coupure de son alimentation.

La figure 4A représente un signal de commande d'inhibition ou veille/éveil issu du circuit de veille et de réveil 16. Il présente une allure cyclique, avec un état bas durant 20 millisecondes qui force à l'état de veille les circuits ci-dessus et un état haut, durant 5 ms, dans lequel le récepteur 1 est à l'état éveillé et donc totalement fonctionnel pour recevoir les trames 50, 70 et les exploiter.

A l'état de veille, la consommation du récepteur 1 est très limitée, si bien que la consommation moyenne sur chaque cycle de 25 ms n'est que de 20 % de la consommation à l'état éveillé.

La figure 4B représente la trame 50 des signaux de télémesure de pression. La trame 50 est à la norme de la trame TPMS des systèmes de surveillance de la pression des pneumatiques (Type Pressure Monitoring System), est émise par modulation d'une porteuse modulée en fréquence à 9 600 b/s et dure 35,75 ms. Elle comporte le champ d'en-tête 51 de réveil du récepteur 1, durant 30 ms, suivi d'un champ 52 de synchronisation logique du récepteur 1, durant 0,75 ms, et d'un champ 53 de 48 bits de données utiles, durant 5 ms.

Le format des trames 70 émises par l'émetteur 6 et représenté sur la figure 4C est globalement semblable à celui des trames 50, mais avec des tailles de champs différentes. Les trames 70, émises elles aussi par le circuit radio 63 par modulation de fréquence d'une porteuse, sont transmises dans cet exemple avec une vitesse de modulation différente de celle des trames 50, ici 4 kb/s. Une trame 70 comporte le champ d'en-tête 71 de réveil du récepteur 1, de 32 ms, suivi d'un champ 72 de synchronisation logique de 6,6 ms, comportant 26 bits, et d'un champ 73 de données utiles de 22,5 ms, comportant 88 bits utiles. Le type d'une trame peut donc caractériser les formats de ses champs tout aussi bien que le type et la vitesse de modulation pour sa transmission.

Le fonctionnement des émetteurs 2 à 5, de l'émetteur 6 et du récepteur 1 va maintenant être expliqué plus en détails.

Le récepteur 1 est en veille sur une majeure partie (42) du cycle de la figure 4A et la fenêtre 41 d'échantillonnage ou scrutation des émissions radio des émetteurs 2 à 6 est ouverte cycliquement pour détecter la présence d'un signal radio sur l'antenne du circuit récepteur 17. Le circuit radio récepteur 17 et le microprocesseur 10 passent alternativement de l'état de veille à l'état réveillé selon le cyle prédéterminé 41, 42 du circuit 16. A l'état éveillé, et en cas de réception de trame 50 ou 70, l'unité arithmétique 12, avec la mémoire 13 et les filtres 14, va discriminer les deux types particuliers de trames 50, 70 par discrimination entre les deux fréquences particulières de transmission de données dans les deux en-têtes respectifs 51, 71 des trames 50, 70, en-têtes de durées au moins égales au cycle de scrutation 41, 42. Le signal de l'antenne unique reçu est transmis démodulé à l'unité arithmétique 12, qui comporte un processeur de signal ayant ici en tête un convertisseur analogique/numérique. L'unité arithmétique 12 effectue alors une simple détection du niveau reçu (présence de bits 0 et/ou 1), au moyen d'un intégrateur numérique du signal commandant un comparateur référencé à un seuil déterminé. En l'absence de franchissement du seuil pendant la fenêtre 41, le circuit 16 de veille et de réveil poursuit son cycle et repasse à l'état bas 42 de veille.

Par contre, si le processeur du signal de l'unité arithmétique 12 détecte un franchissement du seuil par le niveau reçu, l'unité arithmétique 12 bloque l'évolution de l'état du circuit 16, à l'état haut, afin de maintenir le récepteur 1 à l'état éveillé (ligne en pointillés de la figure 4A).

Comme les trames 50 et 70 ont une durée d'en-tête 51, 71 au moins égale à celle du cycle de 25 ms du circuit 16, une partie de l'en-tête 51, 71 émis est reçue avec certitude par l'unité arithmétique 12. Ici, les en-têtes 51, 71 ont même une durée d'au moins un cycle 41, 42 accru de la durée d'une fenêtre 41, si bien qu'une fenêtre 41 se trouve toujours entièrement logée temporellement dans tout en-tête 51, 71 reçu. Cela facilite la détection de niveau par intégration sur toute la durée de la fenêtre 41, en filtrant ainsi le bruit sur toute cette durée.

Lors de la réception de l'en-tête 51, 71, l'unité arithmétique 12 se synchronise sur la modulation des bits reçus du circuit récepteur 17, afin d'être apte à lire ou échantillonner immédiatement les bits des champs suivants. Cette synchronisation bit étant ainsi acquise en réception, le champ suivant 52, 72 sert à effectuer une synchronisation logique, ou de trame, afin de lire ensuite tous les bits du champ utile 53, 73, et uniquement ceux-ci, et de les extraire de la trame 50, 70 pour les exploiter. En effet, le principe ci-dessus de fenêtrage empêche de détecter l'instant de début de l'en-tête 51, 71 et il faut donc caler logiquement le récepteur 1 sur le champ utile 53, 73. A cet effet, le champ 52, 72 contient un motif de données de synchronisation trame, spécifique à la trame 50, 70 considérée, qui est aussi en mémoire 13 et que l'unité arithmétique 12 recherche dans le flux de bits provenant du circuit récepteur 17.

Ainsi, dès que l'unité arithmétique 12 a détecté un niveau de réception dépassant le seuil, elle détermine la vitesse de modulation des bits reçus, au moyen de deux filtres 14, respectivement accordés sur les deux fréquences de modulation à 4 000 et 9 600 b/s, et en déduit l'identité de la trame 50 ou 70 reçue. L'unité arithmétique 12 va alors lire en mémoire 13 le motif de synchronisation particulier correspondant 52 ou 72 et le compare au flux de bits reçus du circuit récepteur 17. Ce flux avance, à chaque période bit, d'une position dans un registre à décalage à sorties parallèles reliées à des premières entrées parallèles d'un comparateur dont des secondes entrées parallèles sont reliées à la mémoire 13 et précisément à son champ de motif 42 ou 72. Le motif du champ 52 ou 72 du flux reçu est ainsi reconnu lorsqu'il passe dans une position déterminée du registre à décalage et les bits suivants sont ainsi repérés comme étant le champ utile 53 ou 73, pour être extraits et transmis aux circuits d'exploitation ou traitement 15 afin de les exploiter selon l'application considérée, de surveillance de pression ou de télécommande de serrures.

Comme indiqué plus haut, les champs homologues des deux trames 50, 70 sont de tailles différentes et les filtres 14 permettent de préalablement discriminer les deux trames 50, 70 d'après leurs en-têtes 51, 71 afin de rechercher le motif 52, 72 qui convient et d'extraire ensuite tous les bits du champ utile associé 53, 73. Un champ de télémesure 53 reçu est transmis, après éventuellement une remise en forme dans les circuits de traitement 15, au processeur 18, qui l'analyse pour afficher éventuellement une alarme. Si c'est un champ 73 de télécommande qui est reçu, les circuits de traitement 15 en analysent le contenu pour commander l'actionneur 19 afin d'effectuer un verrouillage ou un déverrouillage des serrures. Le processeur 18 pourrait en variante former un unique ensemble avec les circuits de traitement 15 et être intégré au microprocesseur 10.

En variante, et en particulier dans le cas où les porteuses des deux trames 50, 70 seraient modulées à une même vitesse ou fréquence, il pourrait être prévu de n'effectuer la discrimination des trames 50, 70 qu'au niveau des champs de synchronisation 52, 72.

En pareil cas, les filtres 14 seraient omis et l'unité arithmétique 12 effectuerait alors deux comparaisons en parallèle, pour rechercher les deux champs 52 et 72 dans le flux entrant et ensuite en déterminer le type de trame 50 ou 70 reçu et donc la position du champ utile 53, 73 à extraire et exploiter.

## Revendications

1. Récepteur de surveillance de la pression des pneumatiques d'un véhicule automobile, comportant des moyens (17) de réception sans fil de trames de signaux de pression (50) agencés pour les transmettre à des moyens de traitement (15), **caractérisé par le fait que** les moyens de traitement (15) sont agencés pour aussi traiter des trames (70) d'un autre type pour d'autres signaux, les moyens de réception (17) sont agencés pour passer alternativement d'un état de veille à un état réveillé selon un cycle prédéterminé (41, 42) et il est prévu des moyens (12, 13, 14) de discrimination de trames agencés pour commander en conséquence les moyens de traitement (15) et pour discriminer les deux types particuliers de trames (50, 70) par discrimination entre deux fréquences particulières de transmission de données dans deux en-têtes respectifs (51, 71) des trames (50, 70), de durées au moins égales au cycle (41, 42).

2. Récepteur selon la revendication 1, dans lequel les moyens de discrimination (12, 13, 14) sont agencés pour reconnaître, dans les trames reçues (50, 70), deux motifs de données (52, 72) particuliers à chaque type de trame (50, 70).

## Claims

1. Receiver for monitoring the pressure of the tyres of a motor vehicle, including means (17) for wireless reception of pressure-signal frames (50) configured so as to forward them to processing means (15), **characterized in that** the processing means (15) are configured also to process frames (70) of another type for other signals, the receiving means (17) are configured to pass alternately from a standby state to an alert state according to a predetermined cycle (41, 42) and frame-discrimination means (12, 13, 14) are provided which are configured to control in consequence the processing means (15) to discriminate the two particular types of frames (50, 70) by discrimination between two particular data-transmission frequencies in two respective headers (51, 71) of the frames (50, 70), with durations at least equal to the cycle (41, 42).

2. Receiver according to Claim 1, in which the discrimination means (12, 13, 14) are configured to recognize, in the received frames (50, 70), two data patterns (52, 72) particular to each type of frame (50, 70).

## Patentansprüche

1. Überwachungsempfänger für den Druck der Luftreifen eines Kraftfahrzeugs, mit Mitteln (17) für den drahtlosen Empfang von Signalrahmen (50) betreffend den Druck und zu ihrer Übertragung an Verarbeitungsmittel (15), **dadurch gekennzeichnet, dass** die Verarbeitungsmittel (15) ausgelegt sind, um auch Rahmen (70) anderer Art für andere Signale zu verarbeiten, dass die Empfangsmittel (17) ausgelegt sind, um gemäß einem vorbestimmten Zyklus (41, 42) abwechselnd von einem Stand-by-Zustand in einen Aktivzustand überzugehen, und dass Mittel (12, 13, 14) zur Unterscheidung von Rahmen vorgesehen sind, die ausgelegt sind, um dementsprechend die Verarbeitungsmittel (15) zu steuern und um die beiden bestimmten Typen von Rahmen (50, 70) durch Unterscheidung zwischen zwei bestimmten Datenübertragungsfrequenzen in zwei jeweiligen Vorspannbereichen (51, 71) der Rahmen (50, 70) zu unterscheiden, deren Dauer mindestens der des Zyklus (41, 42) gleicht.

2. Empfänger nach Anspruch 1, bei dem die Unterscheidungsmittel (12, 13, 14) ausgelegt sind, um in den empfangenen Rahmen (50, 70) zwei Datenmuster (52, 72) zu erkennen, die für jeden Rahmentyp (50, 70) eigentümlich sind.
